# EUROPÄISCHE PATENTSCHRIFT

(11) **EP 0 642 682 B1**
(45) Veröffentlichungstag und Bekanntmachung des Hinweises auf die Patenterteilung: **08.07.1998**
(21) Anmeldenummer: 93912385.7
(22) Anmeldetag: 27.05.1993
(51) Int. Cl.: G05B 23/02, G06F 17/00, G06F 17/40

(54) **VERFAHREN ZUR VERARBEITUNG VON MITTELS AKTIVER UND PASSIVER AUFNEHMER ERFASSTER ANALOGER UND BINÄRER MESSGRÖSSEN IN EINER VORWIEGEND ELEKTRISCHE ENERGIE ERZEUGENDEN ANLAGE**
PROCESS FOR PROCESSING ANALOGICAL AND BINARY MEASUREMENT VALUES DETECTED BY ACTIVE AND PASSIVE SENSORS IN A MAINLY ELECTRIC POWER PLANT
PROCEDE DE TRAITEMENT DE VALEURS MESUREES ANALOGIQUES ET BINAIRES DETECTEES PAR DES CAPTEURS ACTIFS ET PASSIFS DANS UNE INSTALLATION GENERANT ESSENTIELLEMENT DE L'ENERGIE ELECTRIQUE

(30) Priorität: 27.05.1992 AT 1096/92
(43) Veröffentlichungstag der Anmeldung: 15.03.1995
(73) Patentinhaber: ELIN ENERGIEVERSORGUNG GESELLSCHAFT m.b.H., 1141 Wien (AT)
(72) Erfinder: MÜLLER, Franz, A-8071 Grambach (AT); EICKHOFF, Heinrich, A-8043 Graz (AT); ALBERT, Günter, A-8160 Weiz (AT); HERMANN, Andreas, A-8160 Weiz (AT)
(74) Vertreter: Rieberer, Stefan, Dipl.-Ing.
(86) Internationale Anmeldenummer: AT9300090
(87) Internationale Veröffentlichungsnummer: WO9324872

(56) Entgegenhaltungen:
- EP-A- 0 170 516
- EP-A- 0 411 869
- EP-A- 0 434 050
- US-A- 5 073 862
- HITACHI REVIEW Bd. 37, Nr. 4, August 1988, TOKYO JP Seiten 237 - 244 A.KAJI ET AL 'ADVANCED FEATURES OF A COMPUTER SYSTEM FOR THERMAL POWER PLANTS'
- IEEE SPECTRUM Bd. 14, Nr. 1, Januar 1977, NEW YORK US Seiten 58 - 62 G.KAPLAN 'Electronics takes control in manufacturing'

## Beschreibung

Die Erfindung betrifft ein Verfahren zur Verarbeitung von mittels aktiver und passiver Aufnehmer erfaßter analoger und binärer Meßgrößen in einer vorwiegend elektrische Energie erzeugenden Anlage, vorzugsweise Wasserkraftwerk oder kalorisches Kraftwerk.

In Kraftwerksanlagen sind normalerweise nur konventionelle Überwachungs- und Schutzeinrichtungen vorgesehen. Diese erlauben nur eine Momentaufnahme eines Zustandes eines Anlagenteiles. Bei Überschreitung von Grenzwerten werden Alarmmeldungen bzw. Schalthandlungen ausgelöst. Eine Beurteilung des Zustandes der gesamten Anlage ist kaum oder nur aufgrund der Erfahrungen des Betriebspersonals möglich. Um gravierende Störfälle und damit verbundene Zerstörungen von Anlagenteilen weitestgehend zu verhindern, ist es notwendig nach bestimmten Zeitabschnitten die Anlage - Generator und Turbine - für Revisionsarbeiten außer Betrieb zu setzen.

Die Aufgabe der Erfindung besteht nun darin, ein Verfahren zu schaffen, mit dem die Turbine und der Generator in einem Kraftwerk derart überwacht werden kann, daß jederzeit deren Gesamtzustand bekannt ist.

In der EP-A- 170 516 ist eine Anordnung zur Diagnose und Überwachung der Teile, wie Generator, Turbine, usw., in Dampfkraftwerken beschrieben. Dabei werden mit Sensoren erfaßte Meßwerte an die Anordnung, welche einen Digitalrechner aufweist, übermittelt. Es werden aktuelle oder bevorstehende Fehlfunktionen in den Teilen des Kraftwerkes berechnet.

Die Aufgabe wird durch die Erfindung gelöst, welche dadurch gekennzeichnet ist, daß die sowohl bei stationären als auch bei instationären Betriebszuständen, insbesondere bei Hochläufen, Ausläufen, Lastabwürfen und Störfällen, der Anlage erfaßten analogen und binären Meßgrößen nach einer Umwandlung in entsprechende Digitalsignale und nach entsprechender Aufbereitung, sowie Vorverarbeitung einer relationalen Echtzeitdatenbank zugeführt werden, die auf ein Digitalrechnersystem, welches aus mindestens zwei, vorzugsweise drei, über einen Ring verbundenen Digitalrechnern mit Zentraleinheit, Speichereinheit und Visualisierungseinrichtung besteht, verteilt ist, und daß im Digitalrechnersystem ein Expertensystem und Berechnungsmodule vorgesehen sind, welche aus den Meßgrößen die momentanen Maschinendaten ermitteln und diese vom Expertensystem mit in der Echtzeitdatenbank abgelegten berechneten bzw. im Urzustand gemessenen Maschinendaten verglichen und einer Bewertung unterzogen werden und vom Expertensystem weiters eine Trendanalyse und eine On-line Diagnose des Anlagenzustandes durchgeführt wird.

Da durch dieses Verfahren immer der Momentanzustand des Generators und der Turbine bekannt ist, sind Instandhaltungen nicht mehr nach festen Terminplänen notwendig, sondern es kann auf eine zustands abhängige Wartung übergegangen werden. Weiters kann durch Kenntnis des Momentanzustandes der Kraftwerksanlage diese auch immer nahe der Leistungsgrenze betrieben werden, wodurch ein höherer Wirkungsgrad erreicht wird.

Von Vorteil ist, daß im Digitalrechnersystem Fehleranalysepakete für den Generator, für Antriebs-, Regel- und Nebenaggregate, wie etwa für den Generatorkühlkreislauf, die Lager und den Lagerkühlkreislauf vorgesehen sind.

Ein weiterer Vorteil des Verfahrens ist, daß das Hauptprogramm des Expertensystems Parametrierdateien und Steuerfunktionen beinhaltet, wobei Steuerfunktionen Vorgaben von variablen Zeitzyklen, variablen Speicherzyklen, Steuerkriterien aus Expertenprogrammteilen, Steuerkriterien von der Visualisierungseinrichtung oder Steuerkriterien aus der Meßgrößenerfassung und der Meßgrößenvorverarbeitung sind.

Ebenfalls von Vorteil ist, daß die Ermittlung des Zustandes von Maschinenkomponenten, wie z.B. Turbinen-, Generatorlager, Ständerwicklung usw., aufgrund von gemessenen oder vorgebbaren Randbedingungen und auch physikalischen Verknüpfungen dieser und weiterer im Digitalrechnersystem zur Verfügung stehender Größen erfolgt.

Letztlich ist von Vorteil, daß die Berechnung der Generator- und Turbinenbetriebskennlinien auf der Basis der tatsächlichen Randbedingungen, insbesondere Meßgrößen erfolgt.

Das erfindungsgemäße Verfahren wird nun noch anhand der Zeichnungen näher erläutert.

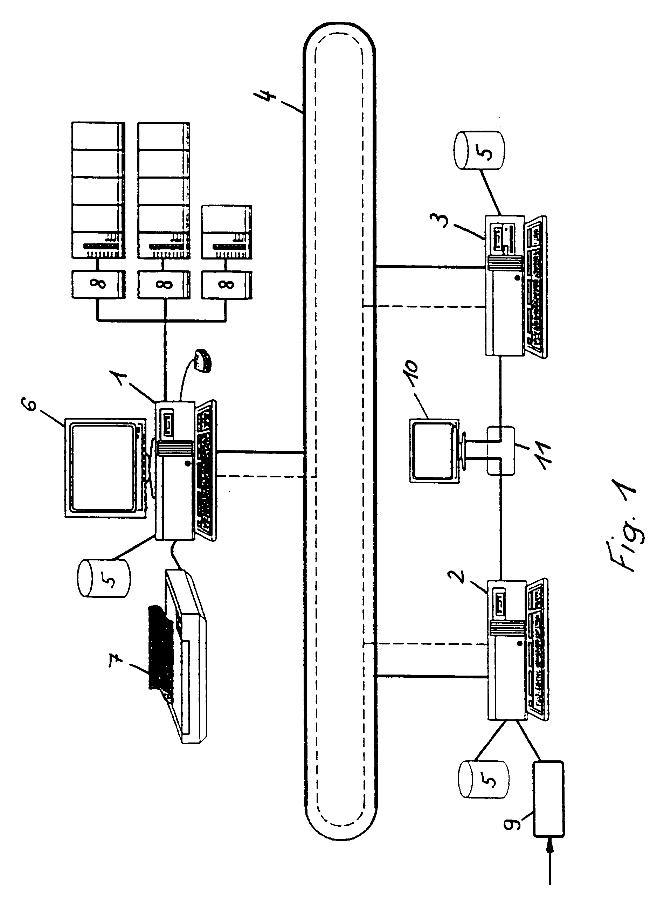

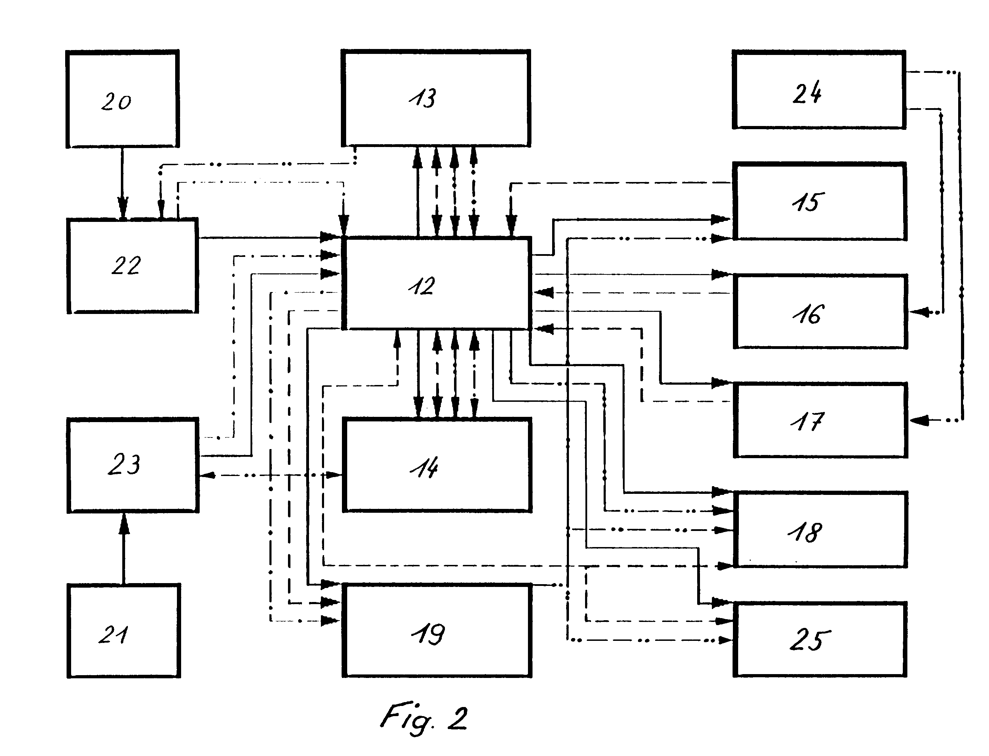

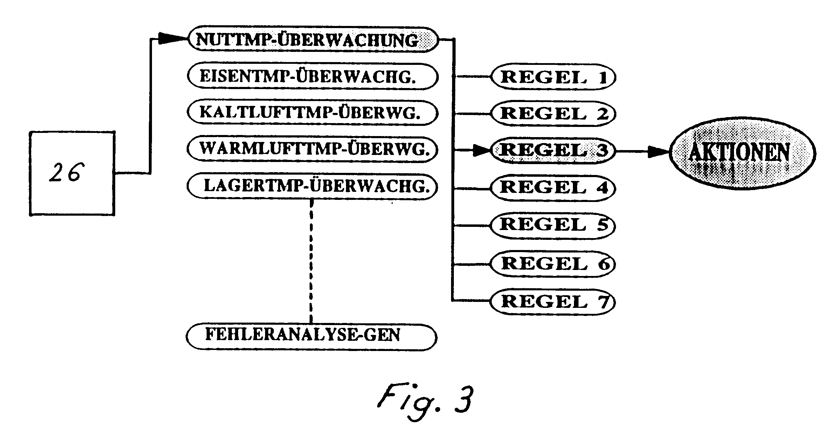

In der Fig. 1 ist eine mögliche Anordnung des Digitalrechnersystems dargestellt, Fig. 2 zeigt schematisch den Datenfluß zwischen der relationalen Echtzeitdatenbank, dem Expertensystem und den Berechnungsmodulen und der Fig. 3 ist der Regelstrukturablauf bei einer Änderung des Meßwertes zu entnehmen.

Bei dem Aufbau in Fig. 1 sind drei Digitalrechner 1, 2, 3, von denen jeder über eine Speichereinheit 5 mit großer Kapazität verfügt, über ein Netzwerk bzw. einen Ring 4 miteinander verbunden. An den Leitrechner 1 ist eine Visualisierungseinrichtung 6 und ein Drucker 7 angeschlossen. Weiters werden dem Leitrechner 1 die mit den Aufnehmern erfaßten analogen und binären Meßgrößen nach einer Aufbereitung in 8 zugeführt. Der Digitalrechner 2 beinhaltet eine schnelle Datenerfassung 9 zur Verarbeitung von mit Aufnehmern erfaßten mechanischen Schwingungsgrößen. Im Digitalrechner 3 sind die Berechnungsmodule und das Expertensystem abgelegt. Den Digitalrechnern 2, 3 ist eine Visualisierungseinrichtung 10 zugeordnet, die über einen Umschalter 11 wahlweise mit einem der beiden Digitalrechner 2, 3 verbunden werden kann. Auf die drei am Netzwerk 4 hängenden Digitalrechner 1, 2, 3 ist die relationale Datenbank so aufgeteilt, daß sie gleichmäßig ausgelastet sind.

In der Fig. 2 ist die Datenbank 12, das Expertensystem 13, 14, die einzelnen Berechnungsmodule 15, 16, 17, 18 und die Prozeßvisualisierung 19 als Block dargestellt. Weiters ist noch die langsame 20 und die schnelle 21 Meßwerterfassung, welche für die Schwingungsaufnahme erforderlich ist, mit entsprechender Datenvorverarbeitung 22, 23, eingezeichnet. Das Expertensystem 13, 14 ist deshalb unterteilt, da es einen langsamen und einen schnellen Teil aufweist. Die vier Berechnungsmodule 15, 16, 17, 18 sind der Reihe nach jener für die Schwingungen 15, jener für die Temperatur 16, jener für den Kühlkreis 17 und jener für den Betrieb 18. Die Berechnungsmodule für die Temperatur 16 und den Kühlkreis 17 werden von einem Steuermodul 24 gesteuert. Der Modul 25 stellt eine Trendanalyse dar. Die Übergabe von Meßwerten zwischen den Blöcken ist als volle Linie, jene von Rechenwerten mit einer unterbrochenen Linie, jene von Steuersignalen mit einer doppelt strichpunktierten Linie und jene von Meldungen, Warnungen und Alarmen mit einer strichpunktierten Linie dargestellt.

Bei dem schematisch dargestellten Regelstrukturablauf in Fig. 3, wird bei einer Meßwertänderung, schematisiert durch Block 26, das Programm Nuttemperatur-Überwachung aktiviert. Dieses beinhaltet eine Anzahl von Regeln, hier z.B. sieben, von denen eine erfüllt ist und die eine entsprechende Aktion einleitet.

## Patentansprüche

1. Verfahren zur Verarbeitung von mittels aktiver und passiver Aufnehmer erfaßter analoger und binärer Meßgrößen in einer vorwiegend elektrische Energie erzeugenden Anlage, vorzugsweise Wasserkraftwerk oder kalorisches Kraftwerk, **dadurch gekennzeichnet,** daß die sowohl bei stationären als auch bei instationären Betriebszuständen, insbesondere bei Hochläufen, Ausläufen, Lastabwürfen und Störfällen, der Anlage erfaßten analogen und binären Meßgrößen nach einer Umwandlung in entsprechende Digitalsignale und nach entsprechender Aufbereitung, sowie Vorverarbeitung (22, 23) einer relationalen Echtzeitdatenbank (12) zugeführt werden, die auf ein Digitalrechnersystem (1, 2, 3, 4, 5, 6, 7, 8, 9, 10, 11), welches aus mindestens zwei, vorzugsweise drei, über einen Ring (4) verbundenen Digitalrechnern (1, 2, 3) mit Zentraleinheit, Speichereinheit (5) und Visualisierungseinrichtung (6, 10) besteht, verteilt ist, und daß im Digitalrechnersystem (1, 2, 3, 4, 5, 6, 7, 8, 9, 10, 11) ein Expertensystem (13, 14) und Berechnungsmodule (15, 16, 17, 18) vorgesehen sind, welche aus den Meßgrößen die momentanen Maschinendaten ermitteln und diese vom Expertensystem (13, 14) mit in der Echtzeitdatenbank (12) abgelegten berechneten bzw. im Urzustand gemessenen Maschinendaten verglichen und einer Bewertung unterzogen werden und vom Expertensystem (13, 14) weiters eine Trendanalyse (25) und eine On-line Diagnose des Anlagenzustandes durchgeführt wird.

2. Verfahren nach Anspruch 1, **dadurch gekennzeichnet,** daß im Digitalrechnersystem (1, 2, 3, 4, 5, 6, 7, 8, 9, 10, 11) Fehleranalysepakete für den Generator, für Antriebs-, Regel- und Nebenaggregate, wie etwa für den Generatorkühlkreislauf, die Lager und den Lagerkühlkreislauf vorgesehen sind.

3. Verfahren nach Anspruch 1 oder 2, **dadurch gekennzeichnet,** daß das Hauptprogramm des Expertensystems (13, 14) Parametrierdateien und Steuerfunktionen beinhaltet, wobei Steuerfunktionen Vorgaben von variablen Zeitzyklen, variablen Speicherzyklen, Steuerkriterien aus Expertenprogrammteilen, Steuerkriterien von der Visualisierungseinrichtung (6, 10) oder Steuerkriterien aus der Meßgrößenerfassung (20, 21) und der Meßgrößenvorverarbeitung (22, 23) sind.

4. Verfahren nach einem der Ansprüche 1 bis 3, **dadurch gekennzeichnet,** daß die Ermittlung des Zustandes von Maschinenkomponenten, wie z.B. Turbinen-, Generatorlager, Ständerwicklung usw., aufgrund von gemessenen oder vorgebbaren Randbedingungen und auch physikalischen Verknüpfungen dieser und weiterer im Digitalrechnersystem (1, 2, 3, 4, 5, 6, 7, 8, 9, 10, 11) zur Verfügung stehender Größen erfolgt.

5. Verfahren nach einem der Ansprüche 1 bis 4, **dadurch gekennzeichnet,** daß die Berechnung der Generator- und Turbinenbetriebskennlinien auf der Basis der tatsächlichen Randbedingungen, insbesondere Meßgrößen erfolgt.

## Claims

1. Method of processing analog and binary measured variables acquired by means of active and passive sensors in a plant generating primarily electrical energy, preferably a hydro-electric power station or thermal power station, characterized in that the analog and binary measured values acquired both in the case of steady-state and transient operating states of the plant, in particular for starting, running down, load shedding and malfunctions, are supplied following conversion into corresponding digital signals and after suitable conditioning and preprocessing (22, 23) to a relational real-time database (12), which is distributed to a digital computer system (1, 2, 3, 4, 5, 6, 7, 8, 9, 10, 11) consisting of at least two and preferably three digital computers (1, 2, 3) linked via a ring (4) with a central unit, storage unit (5) and visualization device (6, 10), and that provided in the digital computer system (1, 2, 3, 4, 5, 6, 7, 8, 9, 10, 11) are an expert system (13, 14) and calculation modules (15, 16, 17, 18), which ascertain the momentary machine data from the measured variables, and these are compared by the expert system (13, 14) with machine data calculated or measured in the original state and filed in the real-time database (12), and are subjected to evaluation, and furthermore a trend analysis (25) and on-line diagnosis of the plant state is performed by the expert system (13, 14).

2. Method according to claim 1, characterized in that fault analysis packets are provided in the digital computer system (1, 2, 3, 4, 5, 6, 7, 8, 9, 10, 11) for the generator, for drive, control and auxiliary units such as the generator cooling circuit, bearings and bearing cooling circuit, for example.

3. Method according to claim 1 or 2, characterized in that the main program of the expert system (13, 14) contains parameterization files and control functions, control functions being input entries of variable time cycles, variable storage cycles, control criteria from expert program sections, control criteria of the visualization device (6, 10) or control criteria from measured variable acquisition (20, 21) and measured variable preprocessing (22, 23).

4. Method according to any one of claims 1 to 3,
characterized in that the state of machine components such as turbine bearings, generator bearings, stator winding etc. is ascertained on the basis of measured or specifiable boundary conditions and also physical linkages of these and other variables available in the digital computer system (1, 2, 3, 4, 5, 6, 7, 8, 9, 10, 11).

5. Method according to any one of claims 1 to 4,
characterized in that the generator and turbine performance characteristics are calculated on the basis of actual boundary conditions, in particular measured variables.

## Revendications

1. Procédé de traitement de valeurs analogiques et binaires mesurées au moyen de capteurs actifs et passifs, essentiellement dans une installation produisant de l'énergie électrique, de préférence une centrale hydraulique ou une centrale thermique, **caractérisé en ce que,** aussi bien dans des conditions de fonctionnement stables que dans des conditions de fonctionnement non stables, en particulier lors des montées en puissance, des mises à l'arrêt, des délestages et des pannes, les grandeurs mesurées de l'installation, analogiques et binaires, après une conversion en signaux numériques correspondants et une adaptation appropriée ainsi qu'un prétraitement (22, 23) sont fournies à une banque de données fonctionnant en temps réel (12), répartie sur un système de calculateurs numériques (1, 2, 3, 4, 5, 6, 7, 8, 9, 10, 11) constitué d'au moins deux et, de préférence de trois calculateurs numériques (1, 2, 3) connectés par un circuit en anneau (4), avec une unité centrale, une unité de mémoire (5) et un écran de visualisation (6, 10) et en ce que le système de calculateurs numériques (1, 2, 3, 4, 5, 6, 7, 8, 9, 10, 11) comprend un système expert (13, 14) et des modules de calcul (15, 16, 17, 18), permettant de déterminer les données concernant l'état instantané de l'installation à partir des valeurs mesurées et de les comparer, par le système expert (13, 14) avec les données relatives à l'état de l'installation calculées ou mesurées à l'état originel et enregistrées dans la banque de données en temps réel (12) et d'effectuer une évaluation par le système expert (13, 14) dans le but de réaliser une analyse de tendance (25) et d'effectuer un diagnostic en temps réel de l'état de l'installation.

2. Procédé selon la revendication 1, **caractérisé en ce que** le système de calculateurs numériques (1, 2, 3, 4, 5, 6, 7, 8, 9, 10, 11) comprend des paquets pour l'analyse des défauts du générateur, des éléments de commande et de régulation, ainsi que des éléments annexes tels que le circuit de refroidissement du générateur, les paliers et les circuits de refroidissement des paliers.

3. Procédé selon la revendication 1 ou 2, **caractérisée en ce que** le programme principal du système expert (13, 14) contient des paramètres et des fonctions de commande, les fonctions de commande comprenant des cycles temporels variables, des cycles de mémoire variables, des critères de commande de parties de programmes experts, des critères de commande de l'écran de visualisation (6, 10) ou des critères de commande du système de saisie des données (20, 21) et du système de prétraitement des données (22, 23).

4. Procédé selon l'une des revendications 1 à 3, **caractérisé en ce que** la détermination de l'état des composants de l'installation tels que les paliers de l'ensemble turbine/générateur, l'enroulement du stator, etc, est faite à partir de conditions limites mesurées ou prédéterminées et également à partir de relations physiques entre ces grandeurs et d'autres grandeurs disponibles dans le système de calculateurs numériques (1, 2, 3, 4, 5, 6, 7, 8, 9, 10, 11).

5. Procédé selon l'une des revendications 1 à 4, **caractérisé en ce que** le calcul des courbes caractéristiques du générateur de la turbine est effectué sur la base des conditions limites effectives, en particulier sur la base des valeurs mesurées.
